# EUROPEAN PATENT SPECIFICATION

(11) **EP 1 226 696 B1**
(45) Date of publication and mention of the grant of the patent: **23.08.2006**
(21) Application number: 00990472.3
(22) Date of filing: 01.11.2000
(51) Int. Cl.: H04L 29/06

(54) **TRANSMITTING INFORMATION OVER A NETWORK**
INFORMATIONSÜBERTRAGUNG ÜBER EIN NETZ
TRANSMISSION D'INFORMATIONS DANS UN RESEAU

(30) Priority: 01.11.1999 US 162875 P
(43) Date of publication of application: 31.07.2002
(73) Proprietor: ITA Software, Inc., Cambridge, MA 02139 (US)
(72) Inventor: REES, James, N., Jr., Waltham, MA 02453 (US)
(74) Representative: Charig, Raymond Julian
(86) International application number: PCT/US2000/041733
(87) International publication number: WO 2001/037514

(56) References cited:
- WO-A-98/44695
- US-A- 5 922 044
- US-A- 5 941 954

## Description

### TECHNICAL FIELD

This invention relates to transmitting information over a network.

### BACKGROUND

Network servers, such as web servers, normally receive requests for information from remote client computers over a network, such as the Internet or an intranet. For example, the requests for information may be HyperText Transfer Protocol (HTTP) "POST" or "GET" requests that are transmitted by a web browser on a client computer when a user submits a query to a web server. Network servers may transmit information to the client computer in response to the request. The transmitted information may be data such as a web page that is formatted in the HyperText Markup Language (HTML), promulgated by the World Wide Web Consortium (W3C). The transmitted information may also be an executable that is, for example, written in the JAVA^{™} programming language, by Sun Microsystems Inc. A JAVA^{™} interpreter on the client computer may execute such an executable.

It is sometimes necessary to transmit an executable to the client computer along with data that is to be processed on the client computer by the executable. For example, a web server may respond to a request for flight itineraries by sending the flight itinerary data along with a JAVA^{™} applet for graphically displaying the data.

WO 98/44695 discloses a method and apparatus for integrating applets running on a client with the application logic for applications running on a server. This provides synchronization of state, and the recognition of user actions in a browser including invocation of appropriate application logic in the server. A hidden applet is created which handles communication between applets on the browser and application logic on the server. Information transmitted between the server and the browser is synchronized without the need to display a new HTML document. An event invoked in the browser instructs an Action Coordinator to invoke an action on the server. The server then responds by transmitting the updated values back to the Action Coordinator, which pushes the updated values out to each applet. The information is then updated in the browser's display.

### SUMMARY

A first general aspect of the invention relates to a method that includes transmitting information by transmitting an executable to a remote location over a network, generating data, and transmitting the generated data to the remote location over the network. At least part of the data is generated while the executable is being transmitted.

By generating part of the data while the executable is being transmitted, the method reduces the delay or latency before the executable and the data arrive at the remote location. The reduction in the delay makes the method more responsive to a user.

A second general aspect of the invention relates to an article that includes a machine-readable medium, which stores machine-executable instructions operable to cause a machine to perform the method of the first general aspect of the invention.

A third general aspect of the invention relates to an apparatus that includes a storage system that stores the executable and the instructions, and a server processor, which executes the instructions to perform the method of the first general aspect of the invention.

Embodiments of the invention may include one or more of the following features. A client at the remote location receives the transmitted executable and then later receives the generated data. The client includes a client processor that executes the executable and indicates that the client computer is waiting for the data. By receiving and executing the executable before the data is received, the client can inform the user that the client is waiting for the data, further increasing the responsiveness of the method to the user. When the data is received, the client processor executes the executable to process the data.

A first portion of the data is generated before a second portion of the data and at least part of the first portion of the data is transmitted while the second portion is being generated, further reducing the latency of the method. The client receives the first portion of the data before it receives the second portion of the data and the executable processes the first portion of the data before the second portion is received. The executable also causes the client to indicate that the first portion of the data has been received before the second portion is received, thereby further increasing the responsiveness of the client.

The information is transmitted in response to a request for information, while the data is transmitted to the client in response to a request for data separate from the request for information. A web page containing a directive to a web browser to request the executable is transmitted to the remote location and a request for the executable is later received from the web browser. The executable is transmitted to the remote location in response to the request for the executable.

Among other advantages of the invention, the reduction in latency and the improved responsiveness of the client improve the experience of the user.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a block diagram of a network that implements the invention and includes a server and clients;
FIGS. 2-5 show web pages that are transmitted by the server of FIG. 1 to the clients of FIG. 1;
FIGS. 6A and 6B are flowcharts of processes implemented by the server of FIG. 1 and a client of FIG. 1;
FIGS. 7A-7C show segments of the HTML representation of the web page of FIG. 5; and
FIGS. 8A and 8B show flowcharts of processes implemented by alternative embodiments of the server and the client of FIG. 1.

Like reference symbols in the various drawings indicate like elements.

### DETAILED DESCRIPTION

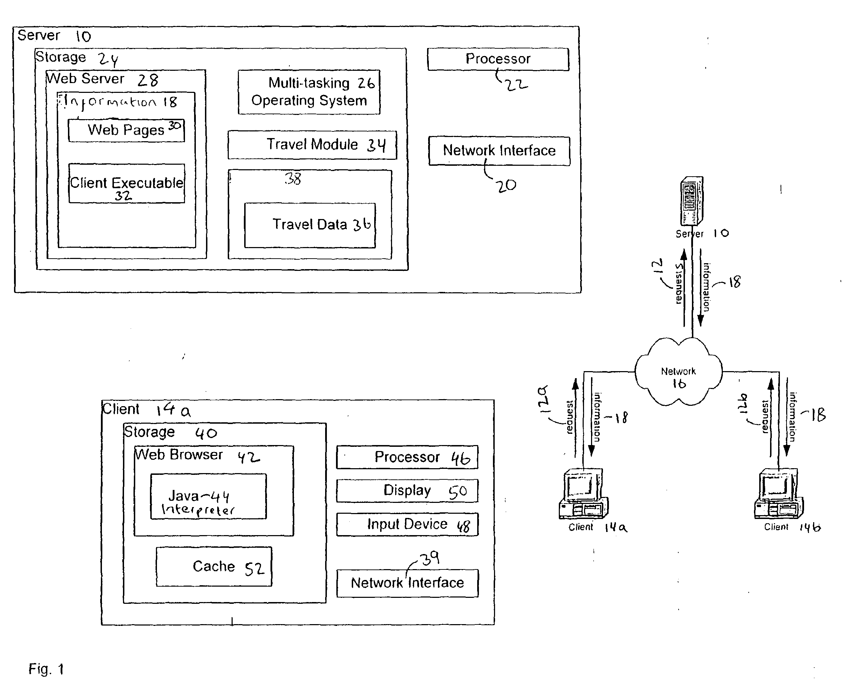

As shown in FIG. 1, a server 10 receives requests 12a, 12b for travel information 18 from remote client computers 14a, 14b over a network 16, such as the Internet or an intranet. As will be described in greater detail below, the server 10 may respond to a request 12 by transmitting travel data and a JAVA^{™} applet to the client over the network 16. The applet is executed on the client computer to process the travel data. The server 10 is configured to generate the travel data while transmitting the applet and then later transmit the travel data to the client computer, as will be described in greater detail below.

Server 10 includes a processor 22 and a network interface 20 that transmits information 18 and receives requests 12 from the network 16. The server 10 also includes a computer-readable storage subsystem 24 that stores computer programs, which are executed by processor 22. Storage subsystem 24 may include a memory, a CDROM, a floppy disk, a hard disk drive, a disk array, or a floppy disk. A multitasking operating system program 26 allows the server 10 to perform multiple tasks at the same time. A web server program 28 receives the requests 12 from a client computers 14a, 14b through the network interface 20 and responds to the requests by transmitting information 18 through the network interface 20 to the client computer. For example, web server 28 may send web pages 30 or a client executable 32, such as a JAVA^{™} applet, both of which may be stored in storage 28. Web server 28 may also respond to requests by using a travel program module 34 to generate travel data 36 from a travel database management system program (DBMS), and transmit the travel data through the network interface 20.

The travel module 34 is a computer program module, such as a dynamically linked library, that is invoked by the web server 28. Web server 28 uses the multitasking operating system 26 to invoke the travel module 34 while the web server 28 is still running. For example, web server 28 may invoke the travel module 34 as a separate operating system process or a separate thread.

The client computer 14a includes a network interface 39 and a storage subsystem 40 that stores client programs, such as a web browser 42 and a JAVA^{™} interpreter 44 that is associated with the web browser. Client computer 14a also includes a processor 46 that executes web browser 42 to receive input from a user through an input device 48 and transmit the input as requests 12a to the server 10 through the network interface 39. The input device 48 may be computer keyboard or a mouse associated with the client computer 14a. Web browser 42 also receives information 18 from server 10 through the network interface 39 and presents it to the user on a display 50 that is associated with the client computer 14a. When the information received includes client executable 32, web browser 42 invokes java interpreter 44 to execute the executable 32. Web browser 42 also stores the information 18 in a cache 52. Should the user later request the stored information 18, the web browser retrieves the information 18 from the cache 52 thereby eliminating the need to receive the information from the network 16. This makes the information available more quickly because the network 16 takes longer to transmit the information 18 than it takes to retrieve the information from the cache 52.

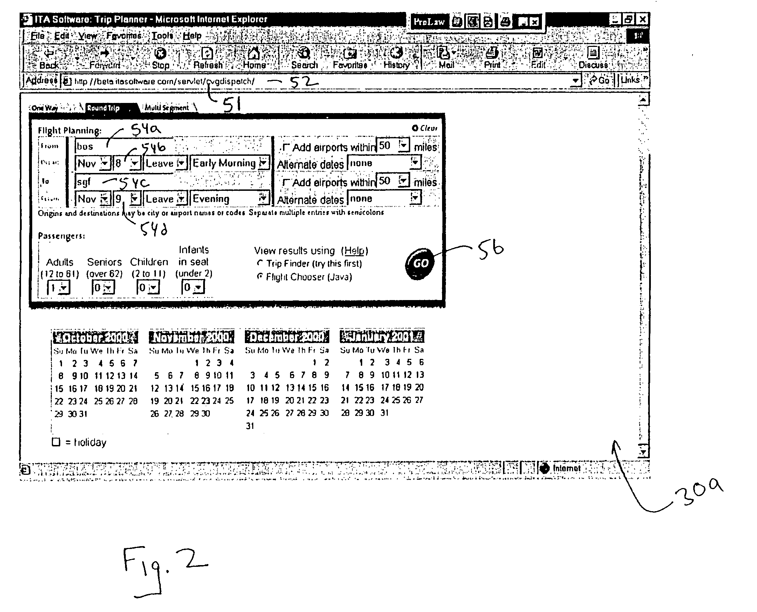

Referring to FIGS. 1 and 2, a user requests a search web page 30a for searching for travel itineraries, by typing a Uniform Resource Location (URL) 51 associated with the web page 30a into an URL input 52 associated with the web browser 42. The web browser transmits the request to the server 10 through the network 16 and the server 10 responds to the request by sending the web page 30a to the browser 42, which in turn presents the web page to the user on display 50.

A user enters search criteria for searching for travel itineraries including a point of departure, a departure time, a point of arrival and an arrival time into inputs 54a-54d contained within search web page 30a. The user then clicks on submission button 56, causing the browser 42 to generate an HTTP post request 12 and transmit the request to the server 10 over the network 16. Upon receiving the request, the server 10 transmits the client executable 32 to the browser 42 while generating the information 18 about the travel itineraries.

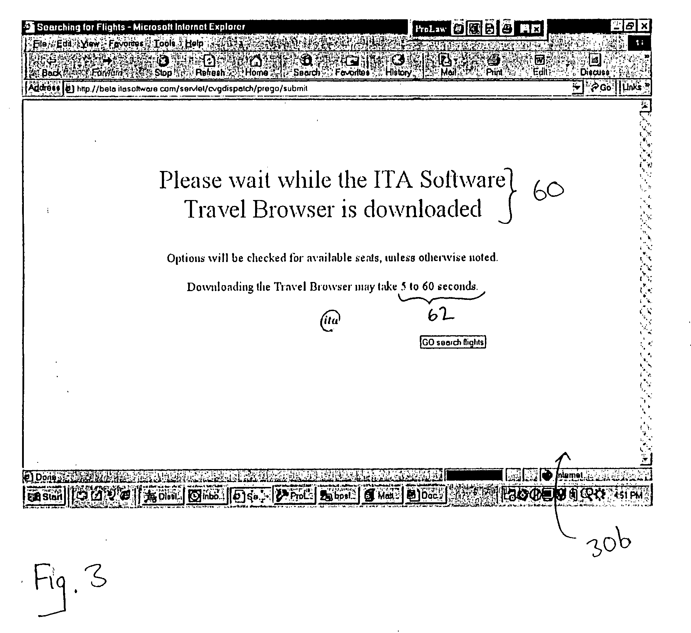

As shown in FIG. 3, the browser 42 presents a web page 30b while the browser waits for information 18 about travel itineraries from the server 10. Web page 30b informs 60 the user to wait while the browser downloads client executable 32, which is a travel browser for displaying the requested information 18 about travel itineraries. Web page 30b also informs the user of the time 62 it will take to download the client executable. Upon receiving the client executable 32, web browser 42 invokes JAVA^{™} interpreter 44 to execute the executable 32.

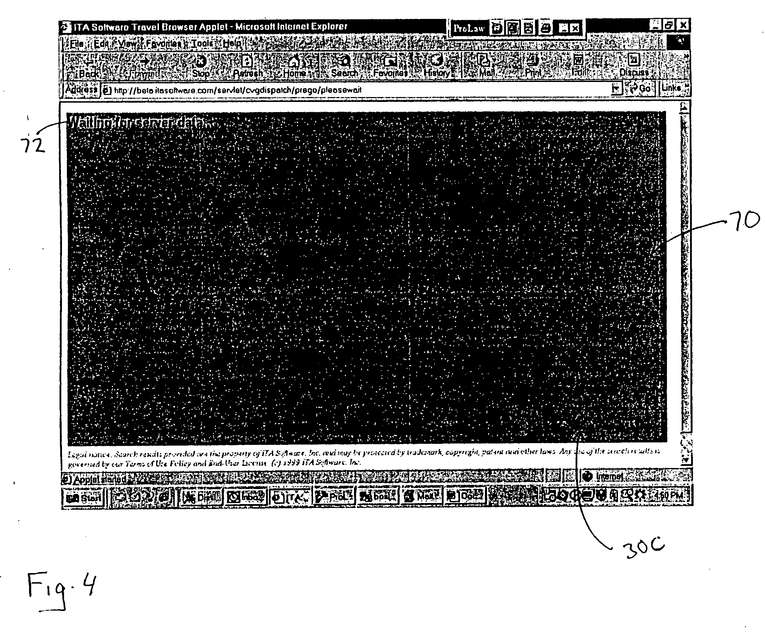

As shown in FIG. 4, client executable 32 presents a panel 70 on a web page 30c that informs 72 the user that the executable 32 is waiting for data 36 on travel itineraries associated with the user's request 12. When web browser 42 receives the data 36, client executable 32 processes the data, for example, by decoding, uncompressing, and preparing the data 36 for graphical presentation on the display 50.

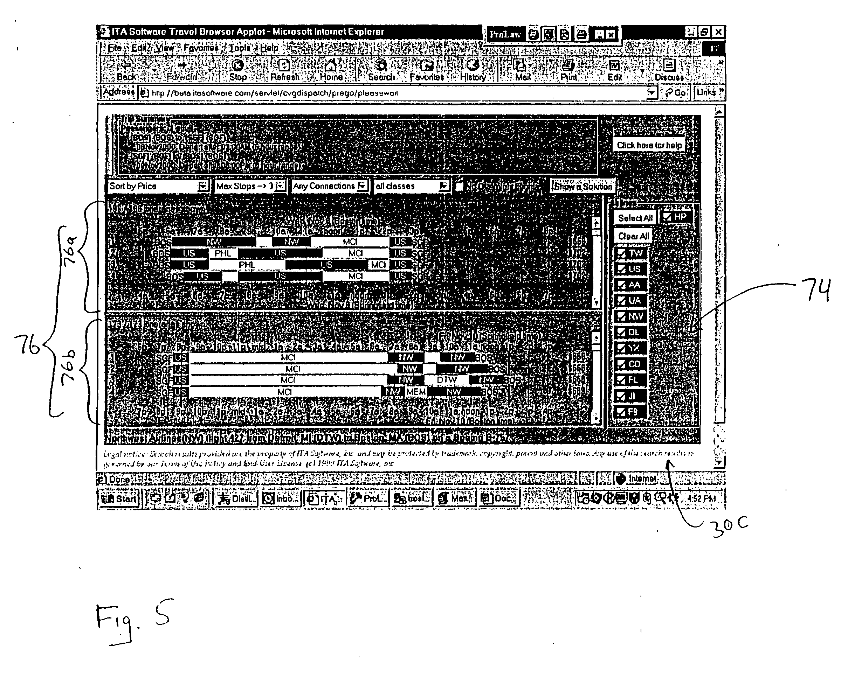

As shown in FIG. 5, client executable 32 replaces the panel 70 (FIG. 4) on web page 30c with a new panel 74, which contains a graphical presentation 76 of such itinerary data as departure flights 76a and arrival flights 76b.

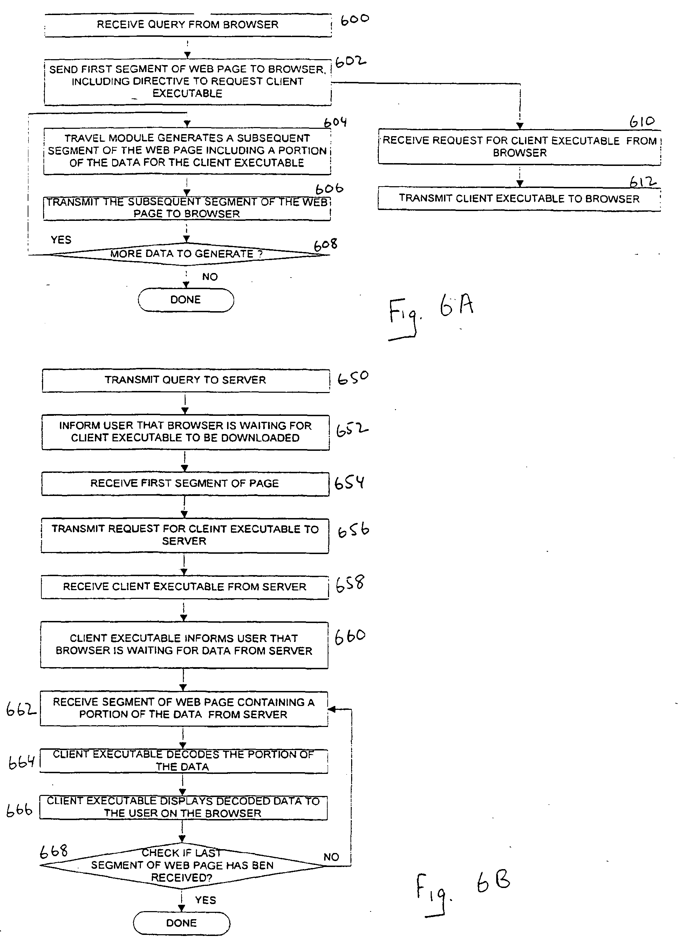

Referring to FIG. 6A, upon receiving (600) the request from browser 42, web server 28 transmits (602) a first segment of the web page 30c (FIGS. 4 and 5) to the browser 42. The first segment includes a directive to the browser 42 to request the client executable 32 from the server 32. The web server 28 invokes the travel module 34, causing the travel module to generate (604) another segment of the web page 30c containing a portion of the travel itinerary data 36. While the travel module is generating the segment of web page 30c, the web server 28 receives (612) a request for client executable 32 from browser 42, and transmits (614) client executable 32 to the browser 42. The web server 28 transmits at least part of client executable 32 while the travel module is generating the segment of the web page.

Web server 28 transmits (606) the generated segment of the web page to the browser 42 and checks (608) with the travel module 34 to determine whether there is another portion of the travel itinerary data 36 to be generated. If there is more data 36 to be generated, the web server 10 invokes the travel module 34 to generate (604) yet another segment of the web page. A part of the segment of the web page may be generated (604) while the previous segment of the web page is being transmitted.

Otherwise, if there is no more data to be generated, the server 10 terminates the process.

Referring to FIG. 6B, when the client computer 14a transmits (650) a data request query to the server 10, the client computer 14a uses web page 30b (FIG. 3) to inform (652) the user that the browser is waiting for the client executable 32 to be downloaded. When the browser 42 receives (654) the first segment of the web page 30c, the directive contained within the web page causes the web browser to transmit (656) a request for the client executable 32 from the server 10. Upon receiving (658) the client executable 32 from the server, java interpreter 44 executes the client executable 32 and informs (660) the user in panel 70 (FIG. 4) that the browser 42 is waiting for data from the server 10.

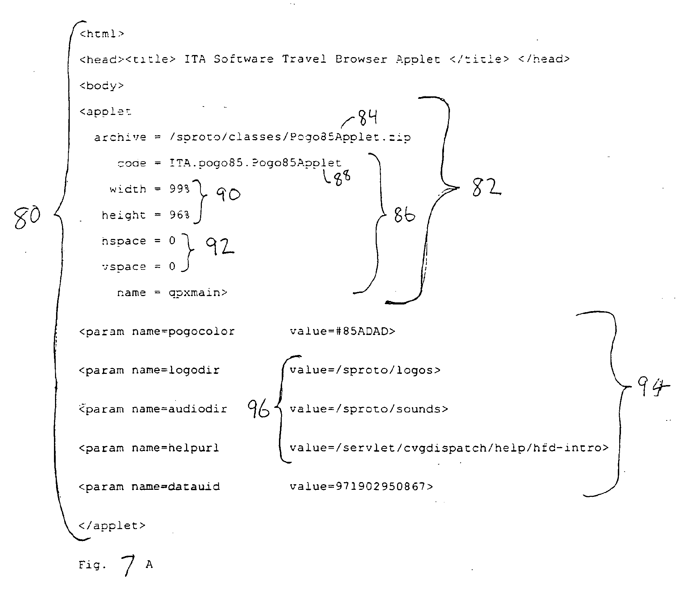

On receiving (662) another segment of the web page containing a portion of the travel itinerary data 36, client executable 32 decodes (664) the portion of the data and graphically displays (666) the decoded data in panel 74 (FIG. 5). Certain client executables 32 may also display an indication to the user that the new segment has been received. For example, they may update a display of the percentage of the travel itinerary data 36 that has been received. The client executable 32 then checks (668) whether the portion of the data 36 in the segment is the last portion, as will be described later with reference to FIG. 7C. If it is not the last portion of the data 36, the web page repeats the process (662-668) of receiving another segment of web page 30c. Otherwise, if it is the last segment, the web browser 42 terminates the process.

As shown in FIG. 7A, the first segment 80 of the web page 30c includes an HTML directive 82 to the browser 42 to request the client executable 32 from a URL 84 and invoke java interpreter 44 to execute the executable 32. Browser 42 responds to the first segment 80 by requesting the executable 32 and storing it in cache 52. The directive 82 also contains attributes that the java interpreter 44 should invoke the executable with. For instance, the code attribute 88 indicates to the interpreter 44 that the executable 32 should be invoked with no data, attributes 90 indicate the size of the panel 70 (FIG. 4) that the executable 32 should display, while attributes 92 indicate the spacing of data displayed in the panel 70. The first segment 80 also contains a set of parameters 94, including a list 96 of the locations where the executable 32 can find such information as logos and sounds.

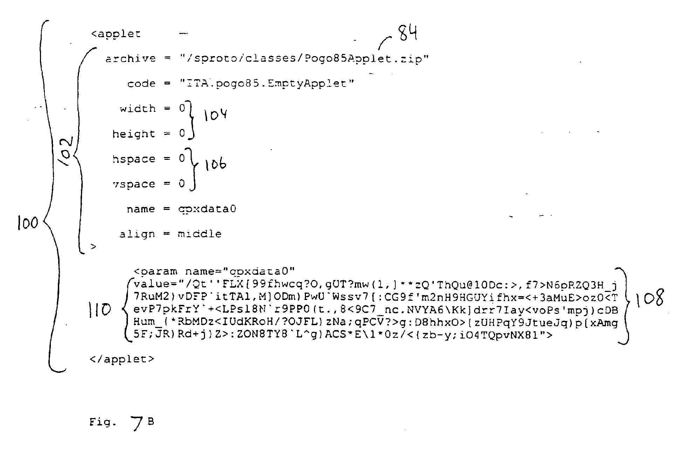

As shown in FIG. 7B, the second segment 100 of the web page 30c also includes an HTML directive 102 to the browser to request the client executable 32 from the URL 84. However, the browser does not retrieve the executable 32 from the server 10 because the browser 42 finds the executable in cache 32. Although the directive 102 also contains attributes 104, 106 indicating the size and spacing that the applet should be invoked with, the values of the attributes are set to zero. Consequently, the second invocation of the executable 32 does not create a new panel. Directive 102 is associated with a parameter 108 that is also contained in the second segment 100 of the web page 30c. The parameter includes a first portion 110 of the travel data 36 for display by the executable 32. As previously described, server 10 may send any number of such segments 100 of the web page each containing a portion of the data. The server 10 may be configured to transmit segments of web pages containing differently sized portions 110 of the data 36, depending on the speed and reliability of the network 16. For most networks, the server 10 is configured to transmit portions of data that are larger than the portion 110.

As shown in FIG. 7C, the last segment 120 of the web page 30c is similar to the second segment 100 (FIG. 7B), but includes an additional parameter 122, which indicates to the executable 32 that there are no more data portions to be received. The client applet 32 checks (668) (FIG. 6B) each segment of the web page 30c for the parameter 122 to determine whether the portion of the data 36 contained in the segment is the last portion of the data. Additionally, the last segment 120 contains html keywords 124 that inform the browser 42 that the browser 42 has received the entire web page 30c.

The client executable 32 graphically displays the data 36 from the segments in the panel 74 (FIG. 5).

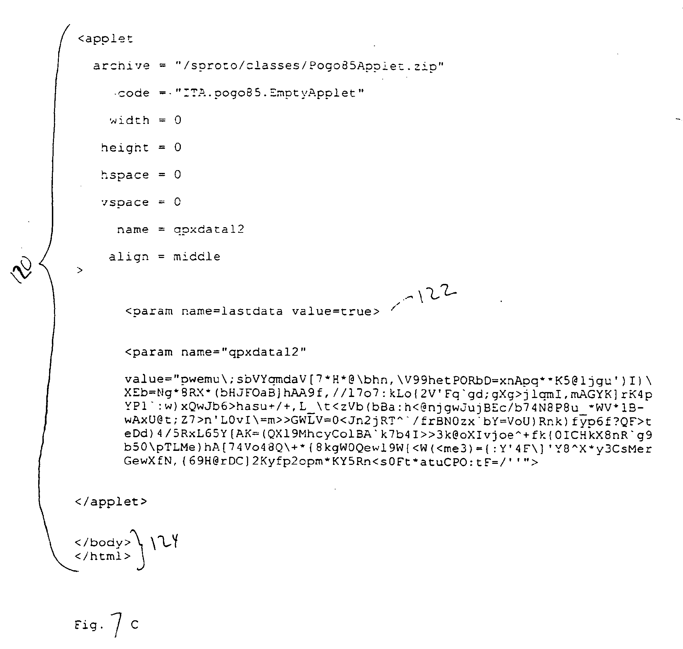

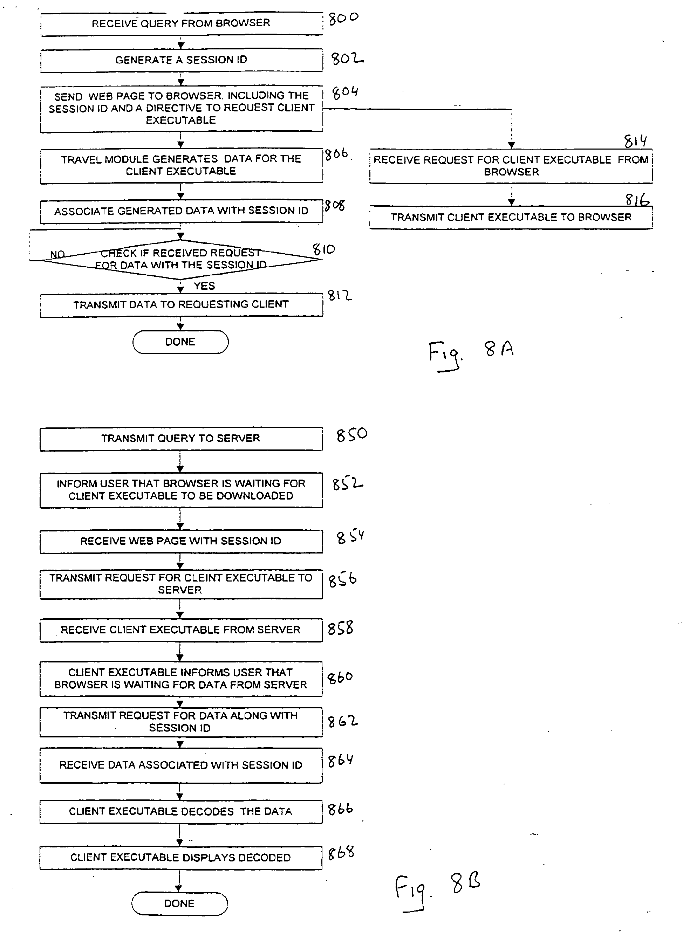

Referring to FIG. 8A, in an alternate embodiment of the invention, upon receiving (800) the request from browser 42, web server 28 generates (802) a session identity (ID) transmits (804) a web page to the browser 42 that includes the session ID along with a directive to the web browser 42 to request the client executable 32 from the server 10. The web server 28 invokes the travel module 34, causing the travel module to generate (806) the travel itinerary data 36. While the travel module 34 is generating the data 36, the web server 28 receives (814) a request for client executable 32 from browser 42, and transmits (816) client executable 32 to the browser 42. The web server 28 transmits at least part of client executable 32 while the travel module is generating the segment of the web page.

Web server 28 associates (808) the data 36 generated by travel module 34 with the session ID and checks (810) whether a request for data that includes the session ID has been received. If the request has not been received, the web server waits (810) for the request. Otherwise, if the request has been received, the web server transmits (812) the data to the requesting client computer 14a and terminates the process. The server 10 may also be configured to segment the generated data and transmit the segments in sequence.

Referring to FIG. 8B, in the alternate embodiment, when the client computer 14a transmits (850) a query to the server 10, the client computer 14a uses web page 30b (FIG. 3) to inform (852) the user that the browser is waiting for the client executable 32 to be downloaded. When the browser 42 receives (854) the web page with the session ID, the directive contained within the web page causes the web browser to transmit (856) a request for the client executable 32 from the server 10. Upon receiving (858) the client executable 32 from the server, java interpreter 44 executes the client executable 32 and informs (860) the user in panel 70 (FIG. 4) that the browser 42 is waiting for data from the server 10.

Client executable 32 transmits (862) a request for the travel data 36 along with the session ID to the server. On receiving (864) the data associated with the session ID from the server, client executable 32 decodes (866) the data and graphically displays (868) the decoded data in panel 74 (FIG. 5).

A number of embodiments of the invention have been described. Nevertheless, it will be understood that various modifications may be made without departing from the spirit and scope of the invention. For example, the client executable may be stored on a different server from travel module 34 and the web page 30c configured so that it causes the web browser to download the client executable from the different server. The server 10 may include multiple processors to allow it to more effectively perform multiple tasks at the same time.

The invention may also be applied to other kinds of servers to perform functions tthat are not related to travel. For example, the invention may applied to a server that distributes music data along with an executable client for playing the music data.

Accordingly, other embodiments are within the scope of the following claims.

## Claims

1. A method comprising:
transmitting information (18) by:
transmitting an executable (32) from a server (10) to a remote location (14a) over a network (16) the executable processing data (36) generated by the server;
generating the data at the server as the executable is being transmitted;
transmitting the generated data to the executable at the remote location over the network, the executable processing the data by:
decoding and uncompressing the data for graphical presentation on a display (50) associated with the remote location; and
displaying the decoded and uncompressed data in a graphical presentation on a display device associated with the remote location.

2. The method of claim 1 wherein a client at the remote location (14a) receives the transmitted executable (32) and the generated data (36) and the client includes a client processor (46) that executes the executable to process the data.

3. The method of claim 2 wherein the transmitted executable (32) is received by the client (14a) before the generated data (36) is received and the executable causes the client computer to indicate that client computer is waiting for the data.

4. The method of claim 2 wherein a first portion of the generated data (36) is received by the client (14a) before a second portion of the generated data and the executable causes the client to indicate that the first portion has been received before the second portion is received.

5. The method of claim 2 wherein a first portion of the generated data (36) is received by the client (46) before a second portion of the generated data and the executable causes the client processor to process the first portion before the second portion is received.

6. The method of claim 1 wherein a first portion of the data (36) is generated before a second portion of the data and at least part of the first portion of the data is transmitted while the second portion is being generated.

7. The method of claim 1 wherein the information is transmitted in response to a request (12) for information.

8. The method of claim 7 wherein the generated data is transmitted in response to a request (12) for data separate from the request for information.

9. The method of claim 1 wherein transmitting the information further comprises:
transmitting to the remote location (14) a web page containing a directive to a web browser (42) to request the executable (32); and
receiving a request (12) for the executable from the web browser, wherein the executable is transmitted to the remote location in response to the request for the executable.

10. A computer program product, comprising a computer readable medium having thereon computer program code means adapted, when said program is loaded onto a computer, to make the computer execute the procedure of any one of claims 1 to 9.

11. An apparatus comprising:
a storage system (24) operable to store machine readable instructions and an executable (32) and;
a server system (10) operable to execute the computer readable instructions to respond to a request for information by:
having means to transmit (612) the executable (32) to a remote location (14a) over a network (16);
having means to generate (604) data at the server system while the executable is being transmitted; and having means
to transmit the generated data to the executable at the remote location over the network, the executable comprises instructions operable to process the data by:
having means to decode and uncompress the data for graphical presentation on a display (50) associated with the remote location: and
having means to display (666) the decoded and uncompressed data in a graphical presentation on a display device associated with the remote location.

12. The apparatus of claim 11 wherein the executable comprises instructions operable to cause a client processor at the remote location to process (664, 666, 866, 868) the data.

13. The apparatus of claim 12 operable to receive the executable at the remote location before the generated data is received wherein the executable comprises instructions operable to cause the client processor to indicate (660, 860) that client processor is waiting for the data.

14. The apparatus of claim 12 operable to receive a first portion of the data at the remote location before a second portion of the data wherein the executable comprises instructions operable to cause the client processor to indicate (666) that the first portion of the data has been received before the second portion is received.

15. The apparatus of claim 12 operable to receive a first portion of the generated data (38) at the remote location before a second portion of the generated data wherein the executable comprises instructions operable to cause the client processor to process (664, 666) the first portion of the generated data before the second portion is received.

16. The apparatus of claim 11 operable to generate a first portion of the data (38) before a second portion of the data and operable to transmit at least part of the first portion of the data while the second portion is being generated.

17. The apparatus of claim 11 operable to transmit the information in response to a request (650) for information.

18. The apparatus of claim 11 operable to transmit the generated data in response to a request (862) for the data separate from the request for information.

## Patentansprüche

1. Verfahren mit:
der Übertragung von Information (18) mittels:
Übertragen einer ausführbaren Anweisung (32) von einem Server (10) zu einer entfernten Position (14a) über ein Netzwerk (16), wobei die ausführbare Anordnung Daten (36) verarbeitet, die von dem Server erzeugt werden;
Erzeugen der Daten an dem Server, wenn die ausführbare Anweisung übertragen wird;
Übertragen der erzeugten Daten zu der ausführbaren Anordnung an die entfernte Position über das Netzwerk, wobei die ausführbare Anordnung die Daten verarbeitet, indem:
die Daten für eine graphische Präsentation auf einer Anzeigevorrichtung (50), die mit der entfernten Position verbunden ist, decodiert und entkomprimiert werden, und
Anzeigen der decodierten und entkomprimierten Daten in einer graphischen Präsentation auf einer Anzeigevorrichtung, die mit der entfernten Position verbunden ist.

2. Verfahren nach Anspruch 1, bei der ein Client an der entfernten Position (14a) die übertragene ausführbare Anweisung (32) und die erzeugten Daten (36) empfängt, und wobei der Client einen Client-Prozessor (46) enthält, der die ausführbare Anweisung zum Verarbeiten der Daten ausführt.

3. Verfahren nach Anspruch 2, bei dem die übertragene ausführbare Anweisung (32) von dem Client (14a) empfangen wird, bevor die erzeugten Daten (36) empfangen werden, und wobei die ausführbare Anordnung den Client-Computer veranlaßt, anzuzeigen, dass der Client-Computer auf die Daten wartet.

4. Verfahren nach Anspruch 2, bei dem ein erster Abschnitt der erzeugten Daten (36) von dem Client (14a) vor einem zweiten Abschnitt der erzeugten Daten empfangen wird, und wobei die ausführbare Anordnung den Client veranlasst anzuzeigen, dass der erste Abschnitt empfangen wurde, bevor der zweite Abschnitt empfangen wurde.

5. Verfahren nach Anspruch 2, bei dem ein erster Abschnitt der erzeugten Daten (36) von dem Client (46) vor einem zweiten Abschnitt der erzeugten Daten empfangen wird, und wobei die ausführbare Anordnung den Client-Prozessor veranlasst, zunächst den ersten Abschnitt zu verarbeiten, bevor der zweite Abschnitt empfangen wird.

6. Verfahren nach Anspruch 1, bei dem ein erster Abschnitt der Daten vor einem zweiten Abschnitt der Daten erzeugt wird und wobei zumindest ein Teil des ersten Abschnitts der Daten übertragen wird, während der zweite Abschnitt erzeugt wird.

7. Verfahren nach Anspruch 1, bei dem die Information in Abhängigkeit von einer Anfrage (12) nach Information übertragen wird.

8. Verfahren nach Anspruch 7, bei dem die erzeugten Daten in Abhängigkeit einer Anfrage (12) nach Daten erzeugt werden, die von der Anfrage nach Information getrennt ist.

9. Verfahren nach Anspruch 1, bei dem das Übertragen der Information des Weiteren umfaßt:
Übertragen zu der entfernten Position (14) einer Web-Page mit einer Adresse eines Web-Browsers (42) zur Anforderung der ausführbaren Anweisung (32); und
Empfangen einer Anforderung (12) für die ausführbare Anweisung von dem Web-Browser, wobei die ausführbare Anweisung an die entfernte Position in Abhängigkeit der Anfrage für die ausführbare Anweisung übertragen wird.

10. Computerprogrammprodukt mit einem computerlesbaren Medium, auf dem ein Computerprogrammcodemittel ist, das ausgestaltet ist, wenn das Programm in einem Computer geladen ist, den Computer zu veranlassen, die Prozedur eines der Ansprüche 1 bis 9 auszuführen.

11. Vorrichtung mit:
einem Speichersystem (24), das betrieben werden kann, um maschinenlesbare Anweisungen und eine ausführbare Anweisung (32) zu speichern, und
einem Serversystem (10), das betrieben werden kann, um die computerlesbaren Anweisungen zu veranlassen, auf eine Anforderung nach Information zu antworten, durch:
das Vorsehen von Mitteln zum Übertragen (612) der ausführbaren Anweisung (32) zu einer entfernten Position (14a) über ein Netzwerk (16);
das Vorsehen von Mitteln zum Erzeugen (604) von Daten an dem Serversystem, während die ausführbare Anweisung übertragen wird; und
durch das Vorsehen von Mitteln zum Übertragen der erzeugten Daten zu der ausführbaren Anweisung an der entfernten Position über das Netzwerk, wobei die ausführbare Anweisung Befehle enthält, die betrieben werden können, um die Daten zu verarbeiten, indem:
Mittel vorgesehen sind, um die Daten für eine graphische Präsentation auf einer Anzeige (50), die mit der entfernten Position verbunden ist, zu decodieren und zu entkomprimieren; und
Mittel vorgesehen sind, um die decodierten und entkomprimierten Daten in einer graphischen Präsentation auf einer Anzeigevorrichtung anzuzeigen (665), die mit der entfernten Position verbunden ist.

12. Vorrichtung nach Anspruch 11, bei der die ausführbare Anweisung Befehle umfaßt, die betrieben werden können, um einen Client-Prozessor an der entfernten Position zu veranlassen, die Daten zu verarbeiten (664,666,866,868).

13. Vorrichtung nach Anspruch 12, die betrieben werden kann, um die ausführbare Anweisung an der entfernten Position zu empfangen, bevor die erzeugten Daten empfangen werden, wobei die ausführbare Anweisung Befehle umfaßt, die betrieben werden können, um den Client-Prozessor zu veranlassen, anzuzeigen (660,860), dass der Client-Prozessor auf die Daten wartet.

14. Vorrichtung nach Anspruch 12, die betrieben werden kann, um einen ersten Abschnitt der Daten an der entfernten Position vor einem zweiten Abschnitt der Daten zu empfangen, wobei die ausführbare Anweisung Befehle umfaßt, die betrieben werden können, um den Client-Prozessor zu veranlassen, anzuzeigen (666), dass der erste Abschnitt der Daten empfangen wurde, bevor der zweite Abschnitt der Daten empfangen wird.

15. Vorrichtung nach Anspruch 12, die betrieben werden kann, um einen ersten Abschnitt der erzeugten Daten (38) an der entfernten Position vor einem zweiten Abschnitt der Daten zu empfangen, wobei die ausführbare Anweisung Befehle umfaßt, die betrieben werden können, um den Client-Prozessor zu veranlassen (664,666), den ersten Abschnitt der erzeugten Daten zu verarbeiten, bevor der zweite Abschnitt der Daten empfangen wird.

16. Vorrichtung nach Anspruch 11, die betrieben werden kann, um einen ersten Abschnitt der Daten (38) vor einem zweiten Abschnitt der Daten zu erzeugen, und wobei diese betreibbar ist, um zumindest einen Teil des ersten Abschnitts der Daten zu übertragen, während der zweite Abschnitt erzeugt wird.

17. Vorrichtung nach Anspruch 11, die betrieben werden kann, um die Information in Abhängigkeit von einer Anfrage (650) nach Information zu übertragen.

18. Vorrichtung nach Anspruch 11, die betrieben werden kann, um die erzeugten Daten in Abhängigkeit von einer Anfrage (862) für die Daten, getrennt von der Anfrage für Information, zu übertragen.

## Revendications

1. Procédé comprenant :
la transmission d'informations (18) en :
transmettant un exécutable (32) d'un serveur (10) à un emplacement distant (14a) sur un réseau (16), l'exécutable traitant des données (36) générées par le serveur ;
générant les données au niveau du serveur lorsque l'exécutable est transmis ;
transmettant les données générées à l'exécutable au niveau de l'emplacement distant sur le réseau, l'exécutable traitant les données en :
décodant et décompressant les données pour la présentation graphique sur un afficheur (50) associé à l'emplacement distant ; et
affichant les données décodées et décompressées dans une présentation graphique sur un dispositif d'affichage associé à l'emplacement distant.

2. Procédé selon la revendication 1, dans lequel un client au niveau de l'emplacement distant (14a) reçoit l'exécutable transmis (32) et les données (36) générées et le client comprend un processeur client (46) qui exécute l'exécutable pour traiter les données.

3. Procédé selon la revendication 2, dans lequel l'exécutable transmis (32) est reçu par le client (14a) avant que les données (36) générées ne soient reçues et l'exécutable fait que l'ordinateur client indique que l'ordinateur client attend les données.

4. Procédé selon la revendication 2, dans lequel une première partie des données (36) générées est reçue par le client (14a) avant une seconde partie des données générées et l'exécutable fait que le client indique que la première partie a été reçue avant que la seconde partie ne soit reçue.

5. Procédé selon la revendication 2, dans lequel une première partie des données (36) générées est reçue par le client (46) avant une seconde partie des données générées et l'exécutable fait que le processeur client traite la première partie avant que la seconde partie ne soit reçue.

6. Procédé selon la revendication 1, dans lequel une première partie des données (36) est générée avant une seconde partie des données et au moins une partie de la première partie des données est transmise pendant que la seconde partie est générée.

7. Procédé selon la revendication 1, dans lequel les informations sont transmises en réponse à une demande (12) d'informations.

8. Procédé selon la revendication 7, dans lequel les données générées sont transmises en réponse à une demande (12) de données séparée de la demande d'informations.

9. Procédé selon la revendication 1, dans lequel la transmission des informations comprend en outre :
la transmission à l'emplacement distant (14) d'une page internet contenant une directive à un navigateur internet (42) pour demander l'exécutable (32) ; et
la réception d'une demande (12) de l'exécutable en provenance du navigateur internet, dans lequel l'exécutable est transmis à l'emplacement distant en réponse à la demande de l'exécutable.

10. Produit de programme informatique, comprenant un support lisible par ordinateur ayant sur celui-ci des moyens de code de programme informatique adapté, lorsque ledit programme est chargé sur un ordinateur, pour faire que l'ordinateur exécute la procédure de l'une quelconque des revendications 1 à 9.

11. Appareil comprenant :
un système de stockage (24) utilisable pour stocker des instructions lisibles par machine et un exécutable (32) et ;
un système serveur (10) utilisable pour exécuter les instructions lisibles par ordinateur pour répondre à une demande d'informations en :
ayant des moyens pour transmettre (612) l'exécutable (32) à un emplacement distant (14a) sur un réseau (16) ;
ayant des moyens pour générer (604) des données au niveau du système serveur pendant que l'exécutable est transmis ; et
ayant des moyens pour transmettre les données générées à l'exécutable au niveau de l'emplacement distant sur le réseau, l'exécutable comprend des instructions utilisables pour traiter les données en :
ayant des moyens pour décoder et décompresser les données pour la présentation graphique sur un afficheur (50) associé à l'emplacement distant ; et
ayant des moyens pour afficher (666) les données décodées et décompressées dans une présentation graphique sur un dispositif d'affichage associé à l'emplacement distant.

12. Appareil selon la revendication 11, dans lequel l'exécutable comprend des instructions utilisables pour faire qu'un processeur client au niveau de l'emplacement distant traite (664, 666, 866, 868) les données.

13. Appareil selon la revendication 12, utilisable pour recevoir l'exécutable au niveau de l'emplacement distant avant que les données générées ne soient reçues, dans lequel l'exécutable comprend des instructions utilisables pour faire que le processeur client indique (660, 860) que le processeur client attend les données.

14. Appareil selon la revendication 12, utilisable pour recevoir une première partie des données au niveau de l'emplacement distant avant une seconde partie des données, dans lequel l'exécutable comprend des instructions utilisables pour faire que le processeur client indique (666) que la première partie des données a été reçue avant que la seconde partie ne soit reçue.

15. Appareil selon la revendication 12, utilisable pour recevoir une première partie des données (38) générées au niveau de l'emplacement distant avant une seconde partie des données générées, dans lequel l'exécutable comprend des instructions utilisables pour faire que le processeur client traite (664, 666) la première partie des données générées avant que la seconde partie ne soit reçue.

16. Appareil selon la revendication 11, utilisable pour générer une première partie des données (38) avant une seconde partie des données et utilisable pour transmettre au moins une partie de la première partie des données pendant que la seconde partie est générée.

17. Appareil selon la revendication 11, utilisable pour transmettre les informations en réponse à une demande (650) d'informations.

18. Appareil selon la revendication 11, utilisable pour transmettre les données générées en réponse à une demande (862) des données séparée de la demande d'informations.
